# EUROPÄISCHE PATENTANMELDUNG

(11) **EP 4 717 920 A1**
(43) Veröffentlichungstag der Anmeldung: **01.04.2026**
(21) Anmeldenummer: 25204540.6
(22) Anmeldetag: 25.09.2025
(51) Int. Cl.: F04B 39/00, F16F 15/04, F25B 1/02, F25B 31/02

(54) **DÄMPFUNGSELEMENT, INSBESONDERE FÜR KOMPRESSOREN, INSBESONDERE VON KLIMAANLAGEN UND BZW. ODER WÄRMEPUMPEN**

(30) Priorität: 27.09.2024 DE 102024209396
(71) Anmelder: ContiTech Deutschland GmbH, 30175 Hannover (DE)
(72) Erfinder: Ziegenmeyer, Henning, 30175 Hannover (DE)
(74) Vertreter: Preusser, Andrea

(57) **Zusammenfassung**

Dämpfungselement (1), vorzugsweise für Kompressoren, insbesondere von Klimaanlagen und/oder Wärmepumpen, mit einem elastischen Dämpfungskörper (10) mit einem unteren Ringabschnitt (10a), einem oberen Ringabschnitt (10d) und einer Mehrzahl von Beinen (10c), welche sich entlang der vertikalen Achse (X) zwischen dem unteren Ringabschnitt (10a) und dem oberen Ringabschnitt (10d) erstrecken, wobei die Beine (10c) in der Umfangsrichtung um die vertikale Achse (Z) herum angeordnet sind.

## Beschreibung

Die vorliegende Erfindung betrifft ein Dämpfungselement, insbesondere für Kompressoren, insbesondere von Klimaanlagen und bzw. oder Wärmepumpen.

Heutzutage ist die Verwendung von Klimaanlagen weit verbreitet. Eine Klimaanlage ist eine Anlage der Luft- und Klimatechnik zur Erzeugung und Aufrechterhaltung einer angenehmen oder benötigten Raumluft-Qualität hinsichtlich von Temperatur und bzw. oder Feuchtigkeit unabhängig von Wetter, Abwärme und menschlichen und technischen Emissionen. Eine Klimaanlage hat die Aufgabe, die Luft eines Raums in einen bestimmten Zustand zu bringen und zu halten, d.h. zu "konditionieren". Oft wird unter einer Klimaanlage jedoch insbesondere eine Anlage zur Kühlung der Raumluft verstanden, siehe https://de.wikipedia.org/wiki/Klimaanlage, siehe Einleitung.

Eine Kaltluft-erzeugende Klimaanlage besitzt eine Kompressor-Kältemaschine, welche eine Wärmepumpe darstellt bzw. eine Wärmepumpe aufweist. Im Kältekreislauf der Wärmepumpe wird der Zusammenhang zwischen Druck und Temperatur des Klimagases als Kältemittel ausgenutzt: Ein Gas, das man komprimiert, erwärmt sich; umgekehrt kühlt es sich ab, wenn man es entspannt, d.h. sich das Gas wieder ausdehnt.

Eine kühlende Klimaanlage funktioniert somit derart, dass das Klimagas im Freien mit einem Kompressor komprimiert wird und sich in einem nachfolgenden Wärmetauscher verflüssigt. Die dabei entstehende Wärme wird an die Umwelt abgeführt. Das Kältemittel hat dann etwa (Außen-)Umgebungstemperatur. Das flüssige Kältemittel wird in den Innenraum geleitet, wo es sich nach einer Kapillare in Kühlrippen (im Verdampfer) wieder ausdehnen darf, wobei es diese unter (Innen-)Raumtemperatur abkühlt. Es nimmt seine spezifische Verdampfungsenthalpie auf. Raumluft wird an den Kühlrippen vorbeigeblasen und gibt dabei ihre Wärme an die Kühlrippen ab - und wird deutlich abgekühlt wieder in den Raum abgegeben. Das verdampfte, durch die Wärmeübertragung von der Raumluft wieder beinahe auf Raumtemperatur erwärmte Klimagas wird wieder nach außen zum Kompressor geführt. Der Kreislauf beginnt wieder von vorn, siehe https://de.wikipedia.org/wiki/Klimaanlage, siehe Abschnitt "Kältemaschinen".

Nachteilig hierbei ist, dass der Kompressor während des Betriebs Schwingungen erzeugt, welche weitere Elemente der Klimaanlage ebenfalls zu Schwingungen anregen können, welche akustisch von einer Person in der Umgebung wahrgenommen werden können. Die Schwingungen können auch als Körperschall in das Bauwerk eingeleitet werden, was ebenfalls störend sein kann. Dies kann, insbesondere bei vergleichsweise leistungsstarken Klimaanlagen mit entsprechend leistungsstarken Kompressoren, zu einer Geräuschbelästigung der Umgebung führen, insbesondere nachts, wenn die Umgebung ansonsten vergleichsweise still ist und die Personen schlafen möchten.

Bekannt sind daher die Verwendung von Schwingungsdämpfungselementen, kurz Dämpfungselemente oder Isolationselemente genannt, um den Kompressor einer Klimaanlage zu lagern und so zu verhindern, dass die Schwingungen des Kompressors auf weitere Elemente der Klimaanlage übertragen werden und dort Schwingungen verursachen, welche von Personen akustisch und bzw. oder mechanisch wahrgenommen werden können.

Aktuell gibt es Dämpfungselemente für schwere Kompressoren oder für sehr leichte Kompressoren von Kühlschränken, oder Dämpfungselemente, die nur in einer Hauptrichtung eine gute Isolation erreichen. Das Problem ist, dass die Federsteifigkeit und Traglast der aktuell auf dem Markt verfügbaren Dämpfungselemente nicht zu dem niedrigen Gewicht der Kompressoren passt.

Des Weiteren ist die Montage der Dämpfungselemente durch mindestens zwei Verschraubungen zeitaufwändig und es können Montagefehler durch ein Verdrehen des Elastomerkörpers beim Fixieren der Schrauben entstehen.

Eine Aufgabe der vorliegenden Erfindung ist es, ein Dämpfungselement, insbesondere für Kompressoren, insbesondere von Klimaanlagen und bzw. oder Wärmepumpen, der eingangs beschriebenen Art bereit zu stellen, so dass Schwingungen wirkungsvoll und gleichzeitig kostengünstig gedämpft werden können. Zusätzlich oder alternativ soll mit einem Dämpfungselement eine Schwingungsdämpfung in mehrere Raumrichtungen, vorzugsweise in alle drei kartesischen Raumrichtungen, erfolgen können. In jedem Fall soll dies möglichst einfach, kompakt, leicht, kostengünstig, montagefreundlich und bzw. oder langlebig erfolgen können. Zumindest soll eine Alternative zu den bekannten Möglichkeiten geschaffen werden.

Die Aufgabe wird erfindungsgemäß durch ein Dämpfungselement mit den Merkmalen gemäß Patentanspruch 1 gelöst. Vorteilhafte Weiterbildungen sind in den Unteransprüchen beschrieben.

Somit betrifft die vorliegende Erfindung ein Dämpfungselement, vorzugsweise für Kompressoren, insbesondere für Kompressoren von Klimaanlagen und bzw. oder Wärmepumpen, mit einem elastischen Dämpfungskörper mit einem unteren Ringabschnitt, einem oberen Ringabschnitt und einer Mehrzahl von Beinen, welche sich entlang der vertikalen Achse zwischen dem unteren Ringabschnitt und dem oberen Ringabschnitt erstrecken, wobei die Beine in der Umfangsrichtung um die vertikale Achse herum angeordnet sind. Die Umfangsrichtung liegt, in kartesischen Koordinaten betrachtet, in der horizontalen Ebene.

Somit ist erfindungsgemäß die Geometrie des Dämpfungselements bzw. dessen elastischen Dämpfungskörpers derart gestaltet, dass vergleichsweise niedrige Steifigkeiten in alle drei kartesischen Raumrichtungen bzw. entlang der Längsachse sowie radial hierzu erreicht werden können. Diese niedrigen Steifigkeiten ergeben gute Isolationsgrade in alle Raumrichtungen.

Erreicht werden die niedrigen Steifigkeiten dadurch, dass der elastische Dämpfungskörper nicht als Vollmaterial oder Ringmaterial ausgeführt ist. Die geometrische Ausführung ist stattdessen erfindungsgemäß derart gewählt, dass wenigstens drei oder mehr Beine zwischen den beiden Ringabschnitten, vorzugsweise als Gummiebenen, positioniert sind. Bei einer Belastung wird die Geometrie der Beine so umgeformt, dass sich im gewünschten Arbeitsbereich niedrige Steifigkeiten ergeben. Diese niedrigen Steifigkeiten liegen in allen Raumrichtungen auf einem ähnlichen Niveau.

Die Eigenfrequenz des Dämpfungselement bzw. dessen elastischer Dämpfungskörper, welche sich aus der Tragkraft und der Federsteifigkeit zusammensetzt, kann in einem weiten Bereich an die Anforderungen des Anwendungsfalls angepasst werden.

Das Dämpfungselement bzw. dessen elastischer Dämpfungskörper kann mit einer unterschiedlichen Anzahl von Beinen ausgeführt werden, welche je nach Anwendungsfall in der Anzahl, in der Verteilung, im Querschnitt und bzw. oder in der Länge variiert werden können.

Vorzugsweise ist der elastische Dämpfungskörper mit seinem unteren Ringabschnitt, seinem oberen Ringabschnitt und seiner Mehrzahl von Beinen aus einem Stück, d.h. integral, ausgebildet. Vorzugsweise besteht der elastische Dämpfungskörper mit seinem unteren Ringabschnitt, seinem oberen Ringabschnitt und seiner Mehrzahl von Beinen aus einem elastomeren Material, vorzugsweise aus Gummi.

Gemäß einem Aspekt der Erfindung sind die Beine in der Umfangsrichtung gleichmäßig verteilt um die vertikale Achse herum angeordnet.

Dies kann eine konkrete Möglichkeit der Umsetzung darstellen und es begünstigen, die zuvor beschriebenen Eigenschaften und Vorteile zu realisieren. Insbesondere kann die zuvor beschriebenen niedrigen Steifigkeiten in allen Raumrichtungen möglichst gleich erreicht werden. Auch kann dies die Herstellung vereinfachen.

Gemäß einem weiteren Aspekt der Erfindung sind die Beine gleich ausgebildet.

Dies kann eine konkrete Möglichkeit der Umsetzung darstellen und es begünstigen, die zuvor beschriebenen Eigenschaften und Vorteile zu realisieren. Insbesondere kann die zuvor beschriebenen niedrigen Steifigkeiten in allen Raumrichtungen möglichst gleich erreicht werden. Auch kann dies die Herstellung vereinfachen.

Gemäß einem weiteren Aspekt der Erfindung sind die Beine in der Umfangsrichtung durch Aussparungen zueinander beabstandet.

Dies kann eine konkrete Möglichkeit der Umsetzung darstellen und es begünstigen, die zuvor beschriebenen Eigenschaften und Vorteile zu realisieren. Insbesondere kann die zuvor beschriebenen niedrigen Steifigkeiten in allen Raumrichtungen möglichst gleich erreicht werden. Auch kann dies die Herstellung vereinfachen.

Gemäß einem weiteren Aspekt der Erfindung sind die Aussparungen in der Umfangsrichtung gleichmäßig verteilt um die vertikale Achse herum angeordnet.

Dies kann eine konkrete Möglichkeit der Umsetzung darstellen und es begünstigen, die zuvor beschriebenen Eigenschaften und Vorteile zu realisieren. Insbesondere kann die zuvor beschriebenen niedrigen Steifigkeiten in allen Raumrichtungen möglichst gleich erreicht werden. Auch kann dies die Herstellung vereinfachen.

Gemäß einem weiteren Aspekt der Erfindung sind die Aussparungen gleich ausgebildet.

Dies kann eine konkrete Möglichkeit der Umsetzung darstellen und es begünstigen, die zuvor beschriebenen Eigenschaften und Vorteile zu realisieren. Insbesondere kann die zuvor beschriebenen niedrigen Steifigkeiten in allen Raumrichtungen möglichst gleich erreicht werden. Auch kann dies die Herstellung vereinfachen.

Gemäß einem weiteren Aspekt der Erfindung weist das Dämpfungselement genau drei Beine auf, welche in der Umfangsrichtung gleichmäßig verteilt um die vertikale Achse herum angeordnet sind.

Dies kann eine konkrete Möglichkeit der Umsetzung darstellen und es begünstigen, die zuvor beschriebenen Eigenschaften und Vorteile zu realisieren. Insbesondere kann die zuvor beschriebenen niedrigen Steifigkeiten in allen Raumrichtungen möglichst gleich erreicht werden. Auch kann dies die Herstellung vereinfachen.

Gemäß einem weiteren Aspekt der Erfindung weist das Dämpfungselement genau vier Beine auf, welche in der Umfangsrichtung gleichmäßig verteilt um die vertikale Achse herum angeordnet sind.

Dies kann eine konkrete Möglichkeit der Umsetzung darstellen und es begünstigen, die zuvor beschriebenen Eigenschaften und Vorteile zu realisieren. Insbesondere kann die zuvor beschriebenen niedrigen Steifigkeiten in allen Raumrichtungen möglichst gleich erreicht werden. Auch kann dies die Herstellung vereinfachen.

Gemäß einem weiteren Aspekt der Erfindung weist das Dämpfungselement wenigstens ein unteres Anschlagelement des elastischen Dämpfungskörpers auf, welches zwischen den Beinen angeordnet, mit dem unteren Ringabschnitt verbunden, vorzugsweise integral ausgebildet, und entlang der vertikalen Achse nach oben zum oberen Ringabschnitt hin ausgerichtet ist.

Somit kann im Inneren des Dämpfungselements bzw. dessen elastischen Dämpfungskörpers wenigstens unten wenigstens ein Anschlagselement, vorzugsweise als Gummianschlag, zum Begrenzen der maximalen Wege entlang der Längsachse vorgesehen werden. Der interne Anschlag kann an die Bauraumbedingungen und die daraus resultierenden maximalen Wege angepasst sein.

Gemäß einem weiteren Aspekt der Erfindung weist das Dämpfungselement wenigstens ein oberes Anschlagelement des elastischen Dämpfungskörpers auf, welches zwischen den Beinen angeordnet, mit dem oberen Ringabschnitt verbunden, vorzugsweise integral ausgebildet, und entlang der vertikalen Achse nach unten zum unteren Ringabschnitt hin ausgerichtet ist.

Somit kann im Inneren des Dämpfungselements bzw. dessen elastischen Dämpfungskörpers wenigstens oben wenigstens ein Anschlagselement, vorzugsweise als Gummianschlag, zum Begrenzen der maximalen Wege entlang der Längsachse vorgesehen werden. Der interne Anschlag kann an die Bauraumbedingungen und die daraus resultierenden maximalen Wege angepasst sein.

Vorzugsweise können im Inneren des Dämpfungselements bzw. dessen elastischen Dämpfungskörpers zueinander korrespondierend angeordnete und ausgebildete Anschlagselement, vorzugsweise als Gummianschläge, zum Begrenzen der maximalen Wege entlang der Längsachse oben und unten vorgesehen werden. Die internen Anschläge können an die Bauraumbedingungen und die daraus resultierenden maximalen Wege angepasst werden.

Gemäß einem weiteren Aspekt der Erfindung weist das Dämpfungselement ferner ein erstes, unteres Verbindungselement, welches feststehend, vorzugsweise kraftschlüssig und bzw. oder formschlüssig, mit dem unteren Ringabschnitt verbunden ist, und ein zweites, oberes Verbindungselement auf, welches feststehend, vorzugsweise kraftschlüssig und bzw. oder formschlüssig, mit dem oberen Ringabschnitt verbunden ist.

Die Montage des erfindungsgemäßen Dämpfungselements kann somit mit zwei Verbindungselementen, vorzugsweise als Kunststoffpins, erfolgen. Zunächst kann ein Verbindungselement des Dämpfungselements, vorzugsweise als Gummikörper, in eine Bohrung oder dergleichen einer hinsichtlich ihrer Schwingungen zu dämpfenden Vorrichtung wie insbesondere eines Kompressors oder des Rahmens gesteckt werden. Auf der Rückseite kann die Kontur durch das Einpressen des Verbindungselements, insbesondere eines Kunststoffspins, so umgeformt werden, dass eine feste Verbindung sichergestellt wird.

Die Fixierung kann mit einen Kunststoffpin erfolgen, wobei auch andere Materialen wie z.B. Metalle möglich sind. Es könnte auch eine Fixierung durch einen "Gummipilz" erfolgen, der ohne weiteres Bauteil in eine Bohrung gepresst wird.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Dämpfungselements; und
- Fig. 2: einen Schnitt entlang der vertikalen Achse durch die Darstellung der Fig. 1.

Die Beschreibung der o.g. Figuren erfolgt in kartesischen Koordinaten mit einer Längsachse X, einer zur Längsachse X senkrecht ausgerichteten Querachse Y sowie einer sowohl zur Längsachse X als auch zur Querachse Y senkrecht ausgerichteten vertikalen Achse Z, welche der Richtung der Schwerkraft entspricht. Die Längsachse X kann auch als Tiefe X, die Querachse Y auch als Breite Y und die vertikale Achse Z auch als Höhe Z bezeichnet werden. Die Längsachse X und die Querachse Y bilden gemeinsam die Horizontale X, Y, welche auch als horizontale Ebene X, Y bezeichnet werden kann. Die Längsachse X, die Querachse Y und die vertikale Achse Z können gemeinsam auch als Raumrichtungen X, Y, Z bzw. als kartesische Raumrichtungen X, Y, Z bezeichnet werden.

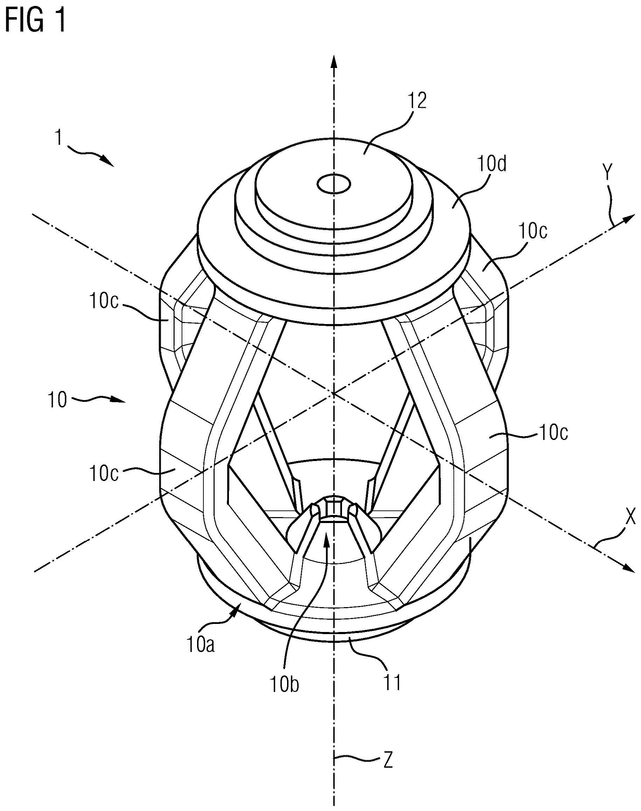

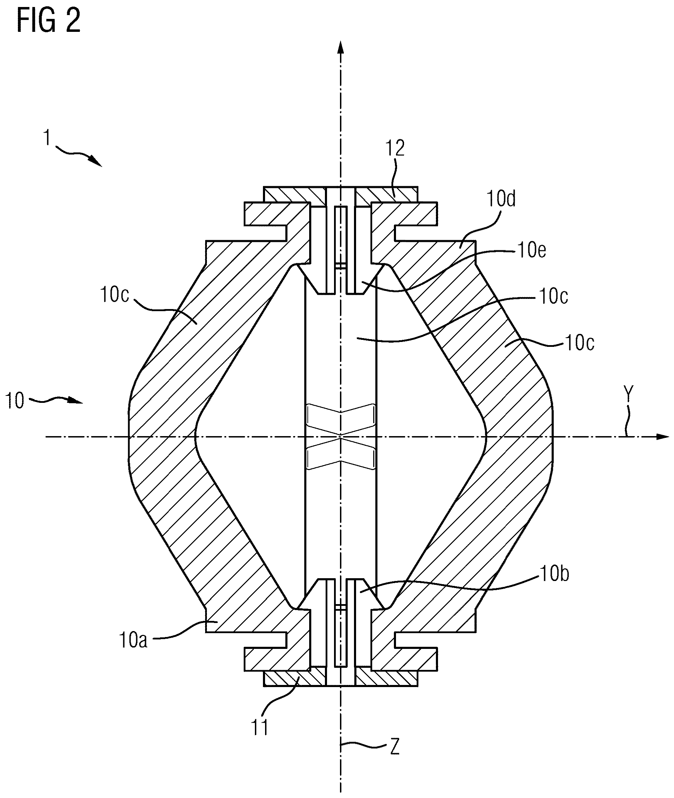

Fig. 1 zeigt eine perspektivische schematische Darstellung eines erfindungsgemäßen Dämpfungselements 1. Fig. 2 zeigt einen Schnitt entlang der vertikalen Achse Z durch die Darstellung der Fig. 1.

Das erfindungsgemäße Dämpfungselement 1 weist einen elastischen Dämpfungskörper 10 aus Gummi auf, welcher einstückig ausgebildet und entlang der Längsachse X angeordnet von unten nach oben einen unteren Ringabschnitt 10a mit einem mittig angeordneten unteren, nach oben zeigenden Anschlagelement 10b, eine ringförmige Anordnung von vier Beinen 10c um die Längsachse X herum sowie einen oberen Ringabschnitt 10d mit einem mittig angeordneten oberen, nach unten zeigenden Anschlagelement 10e aufweist. Die vier Beine 10c sind gleich ausgebildet sowie gleichmäßig und durch gleich ausgebildete Aussparungen (nicht bezeichnet) zueinander beabstandet.

Der elastische Dämpfungskörper 10 ist entlang der vertikalen Achse Z zwischen einem ersten, unteren Verbindungselement 11 und einem zweiten, oberen Verbindungselement 12 angeordnet, mit welchen der elastische Dämpfungskörper 10 feststehend verbunden ist. Das erfindungsgemäße Dämpfungselement 1 wird von dem elastischen Dämpfungskörper 10 zusammen mit den beiden Verbindungselementen 11, 12 gebildet.

Mittels der Beine 10c des elastischen Dämpfungskörpers 10 können vergleichsweise niedrige Steifigkeiten in alle drei kartesischen Raumrichtungen X, Y, Z erreicht werden. Diese niedrigen Steifigkeiten ergeben gute Isolationsgrade in allen kartesischen Raumrichtungen X, Y, Z.

### Bezugszeichenliste (Teil der Beschreibung)

- X: Längsachse; Tiefe
- Y: Querachse; Breite
- Z: vertikale Achse; Höhe
- X, Y: Horizontalen; horizontale Ebene

- 1: Dämpfungselement
- 10: elastischer Dämpfungskörper
- 10a: unterer Ringabschnitt des elastischen Dämpfungskörpers 10
- 10b: unseres Anschlagelement des elastischen Dämpfungskörpers 10
- 10c: Beinen des elastischen Dämpfungskörpers 10
- 10d: oberer Ringabschnitt des elastischen Dämpfungskörpers 10
- 10e: oberes Anschlagelement des elastischen Dämpfungskörpers 10
- 11: erstes, unteres Verbindungselement
- 12: zweites, oberes Verbindungselement

## Patentansprüche

1. Dämpfungselement (1), vorzugsweise für Kompressoren, insbesondere von Klimaanlagen und/oder Wärmepumpen,
mit einem elastischen Dämpfungskörper (10) mit
einem unteren Ringabschnitt (10a),
einem oberen Ringabschnitt (10d) und
einer Mehrzahl von Beinen (10c), welche sich entlang der vertikalen Achse (X) zwischen dem unteren Ringabschnitt (10a) und dem oberen Ringabschnitt (10d) erstrecken,
wobei die Beine (10c) in der Umfangsrichtung um die vertikale Achse (Z) herum angeordnet sind.

2. Dämpfungselement (1) nach Anspruch 1,
wobei die Beine (10c) in der Umfangsrichtung gleichmäßig verteilt um die vertikale Achse (X) herum angeordnet sind.

3. Dämpfungselement (1) nach Anspruch 1 oder 2,
wobei die Beine (10c) gleich ausgebildet sind.

4. Dämpfungselement (1) nach einem der vorangehenden Ansprüche,
wobei die Beine (10c) in der Umfangsrichtung durch Aussparungen zueinander beabstandet sind.

5. Dämpfungselement (1) nach Anspruch 4,
wobei die Aussparungen in der Umfangsrichtung gleichmäßig verteilt um die vertikale Achse (X) herum angeordnet sind.

6. Dämpfungselement (1) nach Anspruch 4 oder 5,
wobei die Aussparungen gleich ausgebildet sind.

7. Dämpfungselement (1) nach einem der vorangehenden Ansprüche,
mit genau drei Beinen (10c), welche in der Umfangsrichtung gleichmäßig verteilt um die vertikale Achse (X) herum angeordnet sind.

8. Dämpfungselement (1) nach einem der Ansprüche 1 bis 6,
mit genau vier Beinen (10c), welche in der Umfangsrichtung gleichmäßig verteilt um die vertikale Achse (X) herum angeordnet sind.

9. Dämpfungselement (1) nach einem der vorangehenden Ansprüche,
mit wenigstens einem unteren Anschlagelement (10b) des elastischen Dämpfungskörpers (10), welches zwischen den Beinen (10c) angeordnet, mit dem unteren Ringabschnitt (10a) verbunden, vorzugsweise integral ausgebildet, und entlang der vertikalen Achse (X) nach oben zum oberen Ringabschnitt (10d) hin ausgerichtet ist.

10. Dämpfungselement (1) nach einem der vorangehenden Ansprüche,
mit wenigstens einem oberen Anschlagelement (10e) des elastischen Dämpfungskörpers (10), welches zwischen den Beinen (10c) angeordnet, mit dem oberen Ringabschnitt (10d) verbunden, vorzugsweise integral ausgebildet, und entlang der vertikalen Achse (X) nach unten zum unteren Ringabschnitt (10a) hin ausgerichtet ist.

11. Dämpfungselement (1) nach einem der vorangehenden Ansprüche, ferner mit einem ersten, unteren Verbindungselement (11), welches feststehend, vorzugsweise kraftschlüssig und/oder formschlüssig, mit dem unteren Ringabschnitt (10a) verbunden ist, und
mit einem zweiten, oberen Verbindungselement (12), welches feststehend, vorzugsweise kraftschlüssig und/oder formschlüssig, mit dem oberen Ringabschnitt (10d) verbunden ist.
